# EUROPÄISCHE PATENTSCHRIFT

(11) **EP 2 497 917 B1**
(45) Veröffentlichungstag und Bekanntmachung des Hinweises auf die Patenterteilung: **10.05.2017**
(21) Anmeldenummer: 12152123.1
(22) Anmeldetag: 23.01.2012
(51) Int. Cl.: F01N 1/08, F02P 5/15

(54) **Zweitaktmotor mit verbessertem Schalldämpfer und angepasstem Motormanagement**
Two-cycle engine with improved noise absorption and adjusted engine management
Moteur à deux temps doté d'un amortisseur de bruit amélioré et d'une gestion de moteur adaptée

(30) Priorität: 09.03.2011 DE 202011000525 U
(43) Veröffentlichungstag der Anmeldung: 12.09.2012
(73) Patentinhaber: Makita Corporation, Anjo, Aichi 446-8502 (JP)
(72) Erfinder: Schönfeld, Michael, 23821 Rohlstorf (DE)
(74) Vertreter: RGTH

(56) Entgegenhaltungen:
- EP-A1- 0 785 343
- DE-U1-202008 005 168
- US-A- 5 738 073

## Beschreibung

Die vorliegende Erfindung betrifft einen Zweitaktmotor, insbesondere für ein handbetriebenes Motorarbeitsgerät wie ein Garten- und Grünanlagenpflegegerät oder für ein Kleinkraftrad, einen Bootsmotor oder dergleichen, mit einem Schalldämpfer, wobei der Schalldämpfer einen Schalldämpfereinlass aufweist, an den sich ein Strömungskanal anschließt, sodass der Strömungskanal mittels dem Schalldämpfereinlass an einem Auslass des Brennraumes des Zweitaktmotors anbringbar ist, wobei der Strömungskanal am dem Schall-dämpfereinlass gegenüberliegenden Kanalende in eine erste Kammer mündet, wobei ferner eine zweite Kammer vorgesehen ist, in die Abgas durch ein vom Strömungskanal abgezweigter Hauptauslass einströmt, wobei die erste Kammer durch die zweite Kammer vorzugsweise umschlossen ist, und wobei der Strömungskanal zwischen dem Schalldämpfereinlass und der ersten Kammer derart strömungsgünstig ausgeformt ist, dass das in den Schalldämpfereinlass einströmende Abgas aufgrund seiner Massenträgheit überwiegend in die erste Kammer einströmt und nach einer Befüllung der ersten Kammer wieder zurückströmt, und sich hierdurch in Richtung zum Brennraum ein Gegendruck bildet, gemäß dem Oberbegriff des Anspruches 1.

### STAND DER TECHNIK

Aus der DE 20 2008 005 168 U1 ist ein gattungsbildender Zweitaktmotor mit einem Schalldämpfer der hier interessierenden Bauart gezeigt. Der Zweitaktmotor ist vereinfacht dargestellt und am Auslass des Zweitaktmotors ist der Schalldämpfer angeordnet, sodass das im Brennraum des Zweitaktmotors verbrannte Kraftstoff-Luftgemisch in den Schalldämpfer eintreten kann. Dabei tritt das Abgas in einen Strömungskanal des Schalldämpfers, über den der Schalldämpfer mittels dem Schalldämpfereinlass am Zylinder des Zweitaktmotors angebracht ist. An den Schalldämpfereinlass schließt sich ein Strömungskanal an, der über ein Kanalende in eine erste Kammer mündet. Zwischen dem Schalldämpfereinlass und dem Kanalende ist am Strömungskanal ein Hauptauslass angeordnet, und Abgas kann durch den Hauptauslass vom Strömungskanal in eine zweite Kammer gelangen, die größer ausgebildet ist als die erste Kammer und die die erste Kammer umschließt.

Der Strömungskanal ist gerade ausgeführt, sodass das über den Schalldämpfereinlass in den Strömungskanal einschießende Abgas zunächst wenigstens überwiegend in die erste Kammer einströmt und in der ersten Kammer einen Überdruck erzeugt. Durch diesen Überdruck strömt ein Großteil des Abgases zurück in Richtung zum Schalldämpfereinlass, und bildet eine Gasbarriere, durch die verhindert wird, dass in den Brennraum des Zylinders nachgeladenes Kraftstoff- Luftgemisch unverbrannt in den Schalldämpfer gelangt. Die geometrische Ausgestaltung des Strömungskanals und der ersten Kammer mit den jeweiligen Volumina ist derart bestimmt, dass ein Strömungsverhalten des Abgases im Strömungskanal und der ersten Kammer entsteht, das mit der Hubbewegung des Kolbens und dem Öffnen des Auslasses des Brennraumes korrespondiert, wenn sich der Kolben in Richtung zum unteren Totpunkt bewegt und die Oberkante des Kolbens den Auslass freigibt. Damit werden bessere Emissionswerte erreicht, insbesondere kann der Wirkungsgrad des Zweitaktmotors durch eine Verringerung des Ausstoßes unverbrannten Kraftstoffes gegenüber konventionellen Schalldämpfern erhöht werden.

Beim Betrieb des Zweitaktmotors mit einem Schalldämpfer der vorbezeichneten Bauart hat sich jedoch gezeigt, dass der Zweitaktmotor ein erhöhtes Klopfniveau aufweisen kann. Das erhöhte Klopfniveau erklärt sich durch den vermehrten Restgasanteil im Brennraum des Zylinders und die daraus resultierende langsamere Brenngeschwindigkeit des Kraftstoff -Luftgemisches. Der erhöhte Restgasanteil kann durch das rückströmende Abgas von der ersten Kammer in Richtung zum Schalldämpfereinlass und teilweise bis in die Brennkammer hinein hervorgerufen werden. Bewegt sich der Kolben vom unteren Totpunkt wieder in Richtung zum oberen Totpunkt, um das Kraftstoff -Luftgemisch zu verdichten, kann ein erhöhter Abgasanteil als Bestandteil des Gasgemisches im Brennraum verbleiben und mit verdichtet werden. Hierdurch kommt es zu einer verschleppten Verbrennung, die zu spät starten kann. Durch die reduzierte Spülung des Brennraumes kann es ferner zu einer Temperaturerhöhung des Zylinders kommen, die ebenfalls unerwünscht ist.

### OFFENBARUNG DER ERFINDUNG

Es ist daher die Aufgabe der vorliegenden Erfindung, einen Zweitaktmotor mit einem Schalldämpfer der im Oberbegriff des Anspruches 1 spezifizierten Bauart derart weiterzubilden, dass die vorstehend beschriebenen Nachteile verhindert werden, insbesondere dass die Betriebsparameter des Motors den Betriebsparametern angeglichen werden, die beim Betrieb eines Zweitaktmotors mit einem Schalldämpfer entstehen, der baulich auf die zweite Kammer beschränkt ausgeführt ist, sodass der Strömungskanal mit einer Kanalöffnung direkt in die zweite Kammer mündet.

Diese Aufgabe wird ausgehend von einem Zweitaktmotor gemäß dem Oberbegriff des Anspruches 1 in Verbindung mit den kennzeichnenden Merkmalen gelöst. Vorteilhafte Weiterbildungen der Erfindung sind in den abhängigen Ansprüchen angegeben.

Die Erfindung schließt die technische Lehre ein, dass der Zündzeitpunkt zur Zündung eines im Brennraum vorhandenen Kraftstoff -Luftgemisches im Vergleich zum Zündzeitpunkt eines mit einem baulich auf die zweite Kammer beschränkten Schalldämpfer betriebenen Zweitaktmotors auf einen früheren Zeitpunkt vor den oberen Totpunkt eines den Brennraum hubbeweglich begrenzenden Kolbens gelegt ist.

Um die vorstehend beschriebenen Nachteile beim Betrieb eines Zweitaktmotors mit einem Schalldämpfer der vorbezeichneten Bauart zu überwinden, insbesondere um dem erhöhten Klopfniveau und dem Temperaturanstieg entgegenzuwirken, hat sich überraschend gezeigt, dass durch eine Vorverlegung des Zündzeitpunktes wenigstens das Klopfniveau und das Temperaturniveau wieder auf Werte zurückführbar sind, die beim Betrieb des Zweitaktmotors mit einem Schalldämpfer bekannt sind, der in seiner Bauart auf die zweite Kammer beschränkt ist, sodass der Strömungskanal mit einer Kanalöffnung direkt in die zweite Kammer mündet.

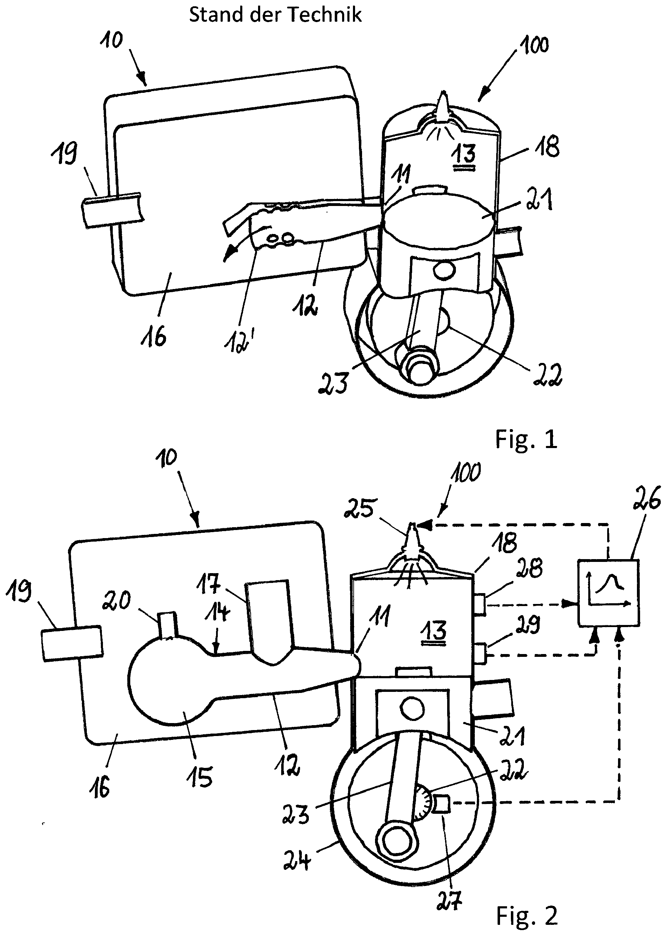

Ein Schalldämpfer der vereinfachten Bauart, die baulich auf die zweite Kammer beschränkt ist, ist als Stand der Technik in Figur 1 gezeigt. Der Zweitaktmotor ist auf bekannte Weise mit einem Zylinder 18 ausgeführt, in dem ein Brennraum 13 gebildet ist, der durch einen Kolben 21 beweglich begrenzt ist. Der Kolben 21 ist zur Bildung eines Kurbeltriebes über eine Pleuel 23 mit einer Kurbelwelle 22 verbunden. Der Brennraum 13 besitzt einen Auslass, der mit einem Schalldämpfereinlass 11 in Verbindung gebracht ist. An den Schalldämpfereinlass 11 schließt sich ein Strömungskanal 12 an, der in eine Kanalöffnung 12' mündet. Das über den Schalldämpfereinlass 11 in den Strömungskanal 12 einströmende Abgas gelangt über die Kanalöffnung 12' in die zweite Kammer 16, die beispielsweise mit einem Dämmmaterial gefüllt sein kann. Anschließend kann das Abgas die zweite Kammer 16 über den Auslass 19 verlassen.

Der gezeigte Schalldämpfer besitzt zwar Eigenschaften zur Schalldämpfung des Zweitaktmotors, jedoch ist keine erste Kammer vorgesehen, in die das durch den Strömungskanal strömende Abgas zunächst eintritt, und nach einem Druckanstieg in der ersten Kammer wieder in Richtung zum Schalldämpfereinlass zurückströmt.

Zweitaktmotoren können mit einem elektronischen Motormanagement ausgestattet sein, das insbesondere den Zündzeitpunkt festlegt, um über eine Zündkerze das Kraftstoff-Luftgemisch zu zünden. Dabei ist bekannt, dass sich vorteilhafte Betriebsparameter des Zweitaktmotors dann einstellen, wenn die Zündung des Kraftstoff-Luftgemisches über die Zündkerze in einem Kurbelwinkel von etwa 24° vor dem oberen Totpunkt in der Aufwärtsbewegung des Kolbens erfolgt.

Wird erfindungsgemäß der Zündzeitpunkt vorverlegt, sodass der Zündzeitpunkt in einen Kurbelwinkel des Kolbens gelegt wird, der größer ist als 24° vor dem oberen Totpunkt, so konnte überraschend festgestellt werden, dass die vorbeschriebenen Nachteile des erhöhten Klopfniveaus und des erhöhten Temperaturniveaus im Zylinder des Zweitaktmotors überwunden werden und wieder auf normale Niveaus gesenkt werden konnten, wie diese für den Betrieb von Zweitaktmotoren bekannt sind, die mit konventionellen Schalldämpfern betrieben werden.

Als besonders vorteilhaft hat sich herausgestellt, dass der Zündzeitpunkt derart früher vor den oberen Totpunkt gelegt werden kann, dass sich ein klopffreier Betrieb des Zweitaktmotors einstellt oder dass sich bei Betrieb des Zweitaktmotors ein Klopfniveau einstellt, das dem Klopfniveau bei Betrieb des Zweitaktmotors mit einem auf die zweite Kammer beschränkten Schalldämpfer entspricht.

Als weiterer vorteilhafter Zündzeitpunkt kann dieser derart früher vor den oberen Totpunkt gelegt werden, dass sich bei Betrieb des Zweitaktmotors ein Temperaturniveau im Zylinder des Zweitaktmotors einstellt, das dem Temperaturniveau bei Betrieb des Zweitaktmotors mit einem auf die zweite Kammer beschränkten Schalldämpfer entspricht. Ebenfalls vorteilhaft ist ein Zündzeitpunkt, der derart früher vor den oberen Totpunkt gelegt ist, dass sich bei Betrieb des Zweitaktmotors ein Druckanstieg/°Kurbelwinkel im Brennraum des Zylinders des Zweitaktmotors einstellt, der dem Druckanstieg/°Kurbelwinkel bei Betrieb des Zweitaktmotors mit einem auf die zweite Kammer beschränkten Schalldämpfer entspricht.

Das Klopfniveau, das Temperaturniveau sowie der Druckanstieg/°Kurbelwinkel sind Erfahrungswerte, die bei Zweitaktmotoren in Betrieb mit konventionellen Schalldämpfern gemäß dem vorstehend dargestellten Stand der Technik bekannt sind. Folglich kann die Vorverlegung des Zündzeitpunktes auf einen Wert, der wenigstens größer ist als 24° vor dem oberen Totpunkt des Kolbens in der Aufwärtsbewegung, so erfolgen, dass das Klopfniveau, das Temperaturniveau und /oder der Druckanstieg/°Kurbelwinkel Werte erreichen, die den Werten entsprechen, die sich einstellen, wenn der Zweitaktmotor mit einen konventionellem Schalldämpfer betrieben wird, der in seiner Bauart auf die zweite Kammer begrenzt ist.

Als besonders vorteilhaft hat sich herausgestellt, wenn die Vorverlegung des Zündzeitpunktes einem Kurbelwinkel von wenigstens 2°, vorzugsweise von wenigstens 4° und besonders bevorzugt von wenigstens 6° entspricht. Damit kann der Zündzeitpunkt beispielsweise auf einen Kurbelwinkel von wenigstens 26°, vorzugsweise wenigstens 28° und besonders bevorzugt wenigstens 30° vor den oberen Totpunkt des Kolbens vorverlegt werden. Werte von größer 30° vor dem oberen Totpunkt des Kolbens können ebenfalls umgesetzt werden, was in Abhängigkeit der detaillierten geometrischen Ausgestaltung des Schalldämpfers mit der ersten und der zweiten Kammer sowie von den weiteren Betriebsparametern des Zweitaktmotors abhängen kann.

Zum Betrieb des Zweitaktmotors ist eine Zündkerze zum Zünden des Kraftstoff -Luftgemisches vorgesehen, die mit einer Zündeinrichtung betreibbar ist, wobei die Zündeinrichtung erfindungsgemäß Mittel aufweisen kann, durch die der Zündzeitpunkt vorverlegbar ist. Die Zündeinrichtung und zugeordnete Mittel werden vorliegend im Begriff des Zweitaktmotors als Bestandteil des Zweitaktmotors betrachtet, häufig sind Zündeinrichtungen zur Bildung des Motormanagements für den Betrieb des Zweitaktmotors sogar integriert im Zweitaktmotor oder wenigstens angebracht am Zweitaktmotor vorgesehen. Die Mittel, durch die der Zündzeitpunkt vorverlegbar ist, können als Bestandteil des Motormanagementprogramms ausgebildet sein, sodass entsprechende Mittel Anwendung finden, wenn der Zweitaktmotor mit einem Schalldämpfer der vorbezeichneten Bauart mit einer ersten und einer zweiten Kammer betrieben wird. Ferner können die Mittel manuell einstellbare Mittel sein, durch die der Zündzeitpunkt bei Montage und Konfektionierung des Zweitaktmotors zum Einsatz insbesondere in einem Motorarbeitsgerät eingestellt wird. Die Einstellung kann beispielsweise mittels Softwareprogrammierung in der Zündeinrichtung, durch Einsatz eines elektronischen Bausteins wie eines EPROM oder durch sonstige Hardwaremittel einmalig vorgenommen werden. Selbstverständlich kann die Einstellung des Zündzeitpunktes auch entweder durch einen Monteur bei der Einrichtung des Zweitaktmotors mit der Zündeinrichtung oder sogar durch einen Benutzer in Betrieb des Motorarbeitsgerätes manuell einstellbar sein.

Mit Vorteil kann ein Drehwinkelsensor vorgesehen sein, der zur Bestimmung des Drehwinkels und/oder der Drehzahl der Kurbelwelle ausgebildet ist, wobei der Drehwinkelsensor mit der Zündeinrichtung verbunden sein kann und zur Übermittlung einer Drehwinkel- und/oder Drehzahlinformation an die Zündeinrichtung ausgebildet ist. Damit liegt der Zündeinrichtung eine Information über die aktuelle Hublage des Kolbens im Zylinder vor, sodass über die Drehwinkelinformation eine Zündung des Kraftstoff -Luftgemisches mittels der Zündkerze im notwendigen Winkelbereich vor dem oberen Totpunkt in der Aufwärtsbewegung des Kolbens erfolgen kann. Insbesondere kann der Drehwinkelsensor so ausgebildet sein, dass der Drehwinkelsensor dann ein Signal an die Zündeinrichtung liefert, wenn der Drehwinkel der Kurbelwelle vor dem oberen Totpunkt des Kolbens einen Wert von größer 24°, beispielsweise ein Wert von 30°, an der Kurbelwelle detektiert.

Insbesondere kann der Drehwinkelsensor in der Zündeinrichtung integriert sein. Dann wird nicht direkt der jeweilige Kurbelwinkel detektiert, sondern aus der je Umdrehung benötigten Zeit und der nach Passieren einer Triggerschwelle vergangenen Zeit errechnete Kurbelwinkel kann verwendet werden, sodass auch auf diese Weise der Zündzeitpunk auf den erforderlichen Wert vorverlegbar ist.

Weiterführend kann ein Klopfsensor vorgesehen und mit der Zündeinrichtung verbunden sein, wobei der Klopfsensor zur Bestimmung des Klopfniveaus ausgebildet und vorzugsweise am Zylinder angeordnet ist. Damit kann ein Regelkreis gebildet werden, und der Klopfsensor sensiert das Klopfniveau am Zylinder des Zweitaktmotors, und der Zündzeitpunkt, der durch die Zündeinrichtung bestimmt wird, richtet sich dynamisch nach dem durch den Klopfsensor sensierten Klopfniveau.

Ein derartiger Regelkreis kann ferner mit einem Temperatursensor erfolgen, sodass ein Temperaturniveau vorgesehen und mit der Zündeinrichtung verbunden ist, wobei der Temperatursensor zur Bestimmung der Temperatur des Zylinders ausgebildet und vorzugsweise am Zylinder angeordnet ist. Erreicht die Temperatur des Zylinders ein Niveau, das höher liegt als das Temperaturniveau, das bekannt ist, wenn der Zweitaktmotor mit einem konventionellem Schalldämpfer betrieben wird, so kann der Zündzeitpunkt durch die Zündeinrichtung derart vorverlegt werden, dass das Temperaturniveau wieder dem gewöhnlichen Temperaturniveau entspricht. Folglich kann sowohl über einen Klopfsensor zusätzlich oder alternativ auch über einen Temperatursensor mit der Zündeinrichtung ein aktiver Regelkreis gebildet werden, und die mittels dem Klopfsensor und/oder mittels dem Temperatursensor gelieferte Größe kann als Führungsgröße dienen, um den Zündzeitpunkt auf einen optimalen Wert vorzuverlegen.

Die Aufgabe der vorliegenden Erfindung wird ferner gelöst durch ein Motorarbeitsgerät mit einem Zweitaktmotor mit den vorstehend beschriebenen Merkmalen.

Ferner wird die Aufgabe der vorliegenden Erfindung gelöst durch ein Verfahren zum Betrieb eines Zweitaktmotors, insbesondere für ein handbetriebenes Motorarbeitsgerät wie ein Garten- und Grünanlagepflegegerät oder für ein Kleinkraftrad, einen Bootsmotor und dergleichen, wobei der Zweitaktmotor mit einem Schalldämpfer ausgeführt ist, und wobei der Schalldämpfer einen Schalldämpfereinlass aufweist, an den sich ein Strömungskanal anschließt, sodass der Strömungskanal mittels dem Schalldämpfereinlass an einen Auslass des Brennraumes des Zweitaktmotors angebracht ist, wobei der Strömungskanal am dem Schalldämpfereinlass gegenüberliegenden Kanalende in eine erste Kammer mündet, wobei ferner eine zweite Kammer vorgesehen ist, in die das Abgas durch ein vom Strömungskanal abgezweigter Hauptauslass einströmt, wobei die erste Kammer durch die zweite Kammer umschlossen ist. Dabei kann der Strömungskanal zwischen dem Schalldämpfereinlass und der ersten Kammer strömungsgünstig ausgeformt werden, dass das in den Schalldämpfereinlass einströmende Abgas aufgrund seiner Massenträgheit überwiegend in die erste Kammer einströmt und nach einer Befüllung der ersten Kammer wieder zurückströmt, sodass hierdurch in Richtung zum Brennraum ein Gegendruck gebildet wird. Dabei kann erfindungsgemäß der Zündzeitpunkt zur Zündung eines im Brennraum vorhandenen Kraftstoff -Luftgemisches so vorverlegt werden, dass der Zündzeitpunkt im Vergleich zum Zündzeitpunkt eines mit einem auf die zweite Kammer beschränkten Schalldämpfer betriebenen Zweitaktmotors auf einen früheren Zündzeitpunkt vor den oberen Totpunkt eines den Brennraum hubbeweglich begrenzenden Kolbens gelegt wird.

### KURZE BESCHREIBUNG DER ZEICHNUNGEN

Weitere die Erfindung verbessernde Maßnahmen werden nachstehend gemeinsam mit der Beschreibung eines bevorzugten Ausführungsbeispiels der Erfindung anhand der Figuren dargestellt. Es zeigt:
Figur 1 einen Zweitaktmotor mit einem Schalldämpfer, der als Einkammer-Schalldämpfer ausgeführt ist und einem Schalldämpfer gemäß einer konventionellen Bauart entspricht,
Figur 2 ein Ausführungsbeispiel eines Zweitaktmotors mit einem Schalldämpfer der hier interessierenden Art, wobei der Zweitaktmotor mit einem erfindungsgemäß vorverlegten Zündzeitpunkt betreibbar ist,
Figur 3 ein Diagramm mit Verläufen des Druckanstiegs/°Kurbelwinkel und
Figur 4 ein Diagramm mit Verläufen der Zylindertemperatur über der Drehzahl des Zweitaktmotors.

### BEVORZUGTES AUSFÜHRUNGSBEISPIEL DER ERFINDUNG

Figur 1 wurde vorstehend bereits gewürdigt und entspricht einem Zweitaktmotor 100 mit einem Schalldämpfer 10, der als Einkammer-Schalldämpfer gemäß einer konventionellen Bauart ausgeführt ist.

Figur 2 zeigt einen Zweitaktmotor 100, der beispielsweise für ein handbetriebenes Motorarbeitsgerät wie ein Garten- und Grünanlagepflegegerät oder für ein Kleinkraftrad, einen Bootsmotor und dergleichen vorgesehen ist. Der Zweitaktmotor 100 ist mit einem Schalldämpfer 10 ausgestattet, der einen Schalldämpfereinlass 11 aufweist, an den sich ein Strömungskanal 12 anschließt, der als gerades Rohr ausgeführt ist. Der Strömungskanal 12 ist mit dem Schalldämpfereinlass 11 an einen Auslass eines Brennraumes 13 des Zweitaktmotors 100 angebracht, wobei der Brennraum 13 des Zweitaktmotors 100 durch einen Kolben 21 beweglich begrenzt ist. Der Kolben 21 ist über eine Pleuel 23 mit einer Kurbelwelle 22 des Zweitaktmotors 100 verbunden, die in einem Kurbelgehäuse 24 drehbar gelagert ist. Der Kolben 21 ist im Bereich des unteren Totpunktes gezeigt, sodass der Schalldämpfereinlass 11 freigegeben ist und Abgas durch den Schalldämpfereinlass 11 in den Strömungskanal 12 einströmen kann.

Der Strömungskanal 12 mündet am dem Schalldämpfereinlass 11 gegenüberliegenden Kanalende 14 in eine erste Kammer 15, wobei ferner eine zweite Kammer 16 vorgesehen ist, in die Abgas durch ein vom Strömungskanal 12 abgezweigter Hauptauslass 17 einströmt. Ferner besitzt die erste Kammer 15 einen Nebenauslass 20, durch den eine weitere, geringere Menge an Abgas direkt von der ersten Kammer 15 in die zweite Kammer 16 eintreten kann. Das in die zweite Kammer 16 eingetretene Abgas kann den Schalldämpfer 10 durch einen Auslass 19 verlassen und freigesetzt werden.

Der Strömungskanal 12 zwischen dem Schalldämpfereinlass 11 und der ersten Kammer 15 ist derart strömungsgünstig ausgeformt, dass das in den Schalldämpfereinlass 11 einströmende Abgas aufgrund seiner Massenträgheit überwiegend in die erste Kammer 15 einströmt und nach einer Befüllung der ersten Kammer 15 wieder zurückströmt, und sich hierdurch in Richtung zum Brennraum 13 ein Gegendruck bildet. Dabei wird der positive Effekt erzielt, dass verhindert wird, dass Kraftstoff- Luftgemisch, das in den Brennraum 13 des Zylinders 18 des Zweitaktmotors 100 einströmt, unverbrannt durch den Schalldämpfereinlass 11 in den Schalldämpfer 10 gelangen kann. Das zurückströmende Abgas von der ersten Kammer 15 in Richtung zum Schalldämpfereinlass 11 bewirkt eine Gasbarriere, sodass ein Eintreten von unverbranntem Kraftstoff-Luftgemisch in den Schalldämpfer 10 verhindert ist.

Durch das in Richtung zum Schalldämpfereinlass 11 zurückströmende Abgas gelangt ein Teil des Abgases in den Brennraum 13, sodass die thermodynamischen Parameter zum Betrieb des Zweitaktmotors 100 leichte Änderungen aufweisen. Insbesondere kann Restgas in den Zylinder 18 zurückgelangen, woraus eine langsamere Brenngeschwindigkeit resultiert. Dadurch kann es zu einer verschleppten Verbrennung kommen, die zu spät startet, sodass ein Klopfniveau beim Betrieb des Zweitaktmotors 100 ansteigen kann.

Der Zweitaktmotor 100 ist mit einer Zündeinrichtung 26 ausgestattet und die derart ausgebildet ist, dass der Zündzeitpunkt zur Zündung des im Brennraum 13 vorhandenen Kraftstoff -Luftgemisches im Vergleich zum Zündzeitpunkt eines mit einem auf die zweite Kammer 16 beschränkten Schalldämpfers 10 (siehe hierzu Figur 1) betriebenen Zweitaktmotors auf einen früheren Zeitpunkt vor den oberen Totpunkt eines den Brennraum 13 hubbeweglich begrenzenden Kolbens 21 gelegt ist. Die Zündeinrichtung 26 ist schematisch dargestellt und ist mit einer Zündkerze 25 des Zweitaktmotors 100 verbunden. Die Zündeinrichtung 26 bewirkt erfindungsgemäß ein Vorverlegen des Zündzeitpunkts vor den Zündzeitpunkt, der beim Betrieb eines Zweitaktmotors 100 vorteilhaft ist, der mit einem konventionellen Einkammer-Schalldämpfer gemäß der Darstellung in Figur 1 betrieben wird.

Der Zündzeitpunkt wird dabei beispielsweise um 6° des Kurbelwinkels vorverlegt, und wird ein Zweitaktmotor 100 mit einem konventionellen Schalldämpfer 10 gemäß der Darstellung in Figur 1 bei 24° Kurbelwinkel vor dem oberen Totpunkt des sich in der Aufwärtsbewegung befindlichen Kolbens 21 gezündet, so wird das Kraftstoff -Luftgemisch bei einem Zweitaktmotor 100 mit einem Zweikammer-Schalldämpfer gemäß der Darstellung in Figur 2 erfindungsgemäß bei einem Kurbelwinkel von 30° vor dem oberen Totpunkt des sich in der Aufwärtsbewegung befindlichen Kolbens 21 gezündet.

Der Zweitaktmotor 100 ist beispielhaft ausgestattet mit einem Drehwinkelsensor 27, der zur Bestimmung des Drehwinkels und/oder der Drehzahl der Kurbelwelle 22 ausgebildet ist, wobei der Drehwinkelsensor 27 mit der Zündeinrichtung 26 verbunden ist und zur Übermittlung einer Drehwinkel- und/oder Drehzahlinformation an die Zündeinrichtung 26 ausgebildet ist. Damit kann der Drehwinkel der Kurbelwelle 22 vor dem oberen Totpunkt des Kolbens 21 detektiert werden, und der Drehwinkelsensor 27 kann beispielsweise dann eine Information an die Zündeinrichtung 26 übermitteln, wenn der Kurbelwinkel der Kurbelwelle 22 einen Wert von 30° vor dem oberen Totpunkt des sich in der Aufwärtsbewegung befindlichen Kolbens 21 aufweist.

Ferner gezeigt ist ein Klopfsensor 28, der am Zylinder 18 angeordnet ist und der mit der Zündeinrichtung 26 verbunden ist. Der Klopfsensor 28 dient zur Bestimmung des Klopfniveaus beim Betrieb des Zweitaktmotors 100, und kann eine Führungsgröße zur dynamischen Veränderung des Zündzeitpunktes vor dem oberen Totpunkt des Zweitaktmotors 100 bilden. Selbstverständlich kann der Klopfsensor 28 auch nur lediglich für experimentelle Zwecke am Zylinder 18 angeordnet werden, um eine einmalig optimale Einstellung des Zündzeitpunktes vor dem oberen Totpunkt des Kolbens 21 zu konfigurieren.

Am Zylinder 18 ist weiterhin ein Temperatursensor 29 gezeigt, und der Temperatursensor 29 ist ebenfalls mit der Zündeinrichtung 26 verbunden. Der Temperatursensor 29 dient zur Bestimmung der Temperatur des Zylinders 18, und kann entweder zur dynamischen Regelung der Vorverlegung des Zündzeitpunktes in einen Kurbelwinkel größer 24° vor dem oberen Totpunkt des Kolbens 21 dienen oder der Temperatursensor 29 dient zur einmaligen Optimierung eines vorteilhaften Zündzeitpunktes.

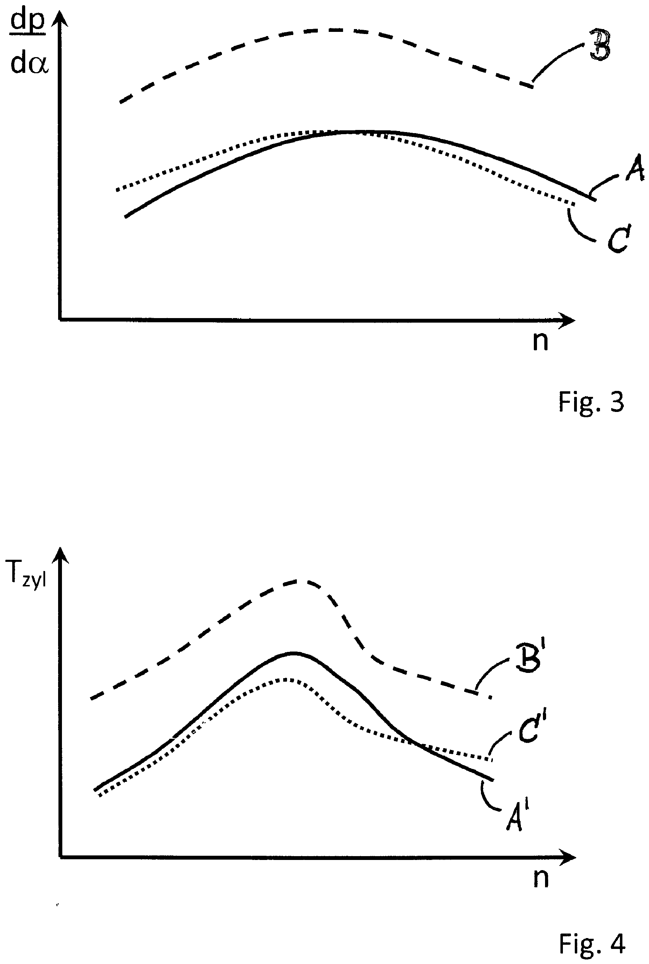

Figur 3 zeigt ein Diagramm des Druckanstiegs über dem Kurbelwinkel dp/dα über der Drehzahl n für verschiedene Betriebszustände des Zweitaktmotors 100. Der Verlauf des Druckanstiegs/°Kurbelwinkel, der bei einem Zweitaktmotor 100 mit einem Einkammer-Schalldämpfer gemäß der Darstellung in Figur 1 mit einem Zündzeitpunkt von 24° vor dem oberen Totpunkt gemessen über der Drehzahl n entsteht, ist mit A gekennzeichnet. B zeigt den Verlauf des Druckanstiegs/°Kurbelwinkel bei Betrieb des Zweitaktmotors 100 mit einem Zweikammer-Schalldämpfer gemäß der Darstellung in Figur 2 und einem Zündzeitpunkt von 24° vor dem oberen Totpunkt, sodass der Zündzeitpunkt nicht geändert wurde. Dabei ist sichtbar, dass sich ein erhöhter Druckanstieg pro °Kurbelwinkel einstellt, wodurch eine erhöhte Klopfneigung beim Betrieb des Zweitaktmotors 100 feststellbar ist. Die Kurve C zeigt schließlich den Druckanstieg/°Kurbelwinkel bei Betrieb des Zweitaktmotors 100 mit einem Zweikammer-Schalldämpfer 10 gemäß der Darstellung in Figur 2, wobei erfindungsgemäß der Zündzeitpunkt vorverlegt wurde, und beispielhaft bereits bei 30° vor dem oberen Totpunkt liegt. Dabei ist erkennbar, dass der Verlauf des Druckanstiegs/°Kurbelwinkel bei Betrieb des Zweitaktmotors 100 mit dem Zweikammer-Schalldämpfer und dem vorverlegten Zündzeitpunkt etwa dem Verlauf A entspricht, der bei einem konventionellen Einkammer-Schalldämpfer und unverändertem Zündzeitpunkt des Zweitaktmotors 100 entsteht.

Figur 4 zeigt die Zylindertemperatur T_{zyl} über der Drehzahl n, wobei der Verlauf A' die Zylindertemperatur T_{zyl} bei Betrieb des Zweitaktmotors 100 mit einem Einkammer-Schalldämpfer 10 gemäß der Darstellung in Figur 1 und einem Zündzeitpunkt von 24° vor dem oberen Totpunkt entspricht. Der Verlauf B' zeigt die Zylindertemperatur T_{zyl} bei Betrieb des Zweitaktmotors 100 mit einem Zweikammer-Schalldämpfer 10 gemäß der Darstellung in Figur 2, wobei der Zündzeitpunkt mit 24° vor dem oberen Totpunkt gemäß dem Betrieb des Zweitaktmotors 100 mit einem Einkammer-Schalldämpfer unverändert belassen wurde. Dabei ist erkennbar, dass die Zylindertemperatur T_{zyl} gegenüber der Zylindertemperatur T_{zyl} mit einem Einkammer-Schalldämpfer angestiegen ist. Wird bei einem Betrieb des Zweitaktmotors 100 mit einem Zweikammer-Schalldämpfer 10 und einem vorverlegten Zündzeitpunkt auf 30° vor dem oberen Totpunkt die Temperatur gemessen, so ergibt sich eine Zylindertemperatur T_{zyl} gemäß dem Verlauf C', der etwa dem Verlauf A' entspricht, wie dieser bereits festgestellt wurde bei Betrieb des Zweitaktmotors 100 mit einem Einkammer-Schalldämpfer und einem Zündzeitpunkt von 24° vor dem oberen Totpunkt.

Durch die Verläufe gemäß den Figuren und 3 und 4 ist erkennbar, dass die Betriebsparameter durch ein erfindungsgemäßes Vorverlegen des Zündzeitpunktes auch bei Betrieb des Zweitaktmotors 100 mit einem Zweikammer-Schalldämpfer gemäß der Darstellung in Figur 2 auf ein Niveau gebracht werden kann, der den Betriebsparametern beim Betrieb des Zweitaktmotors 100 mit einem konventionellen Schalldämpfer 10 gemäß der Darstellung in Figur 1 entspricht.

Die Erfindung beschränkt sich in ihrer Ausführung nicht auf das vorstehend angegebene bevorzugte Ausführungsbeispiel. Vielmehr ist eine Anzahl von Varianten denkbar, welche von der dargestellten Lösung auch bei grundsätzlich anders gearteten Ausführungen Gebrauch macht. Sämtliche aus den Ansprüchen, der Beschreibung oder den Zeichnungen hervorgehenden Merkmale und/oder Vorteile, einschließlich konstruktiver Einzelheiten, räumliche Anordnungen und Verfahrensschritte, können sowohl für sich als auch in den verschiedensten Kombinationen erfindungswesentlich sein.

### Bezugszeichenliste

100 Zweitaktmotor
10 Schalldämpfer
11 Schalldämpfereinlass
12 Strömungskanal
12' Kanalöffnung
13 Brennraum
14 Kanalende
15 erste Kammer
16 zweite Kammer
17 Hauptauslass
18 Zylinder
19 Auslass
20 Nebenauslass
21 Kolben
22 Kurbelwelle
23 Pleuel
24 Kurbelgehäuse
25 Zündkerze
26 Zündeinrichtung
27 Drehwinkelsensor
28 Klopfsensor
29 Temperatursensor
dp/dα Druckanstieg /°Kurbelwinkel
n Drehzahl
T_{zyl} Zylindertemperatur
A dp/dα bei Betrieb des Zweitaktmotors mit Einkammer- Schalldämpfer und Zündzeitpunkt bei 24° vor dem oberen Totpunkt gemessen über der Drehzahl
B dp/dα bei Betrieb des Zweitaktmotors mit Zweikammer- Schalldämpfer und Zündzeitpunkt bei 24° vor dem oberen Totpunkt gemessen über der Drehzahl
C dp/dα bei Betrieb des Zweitaktmotors mit Zweikammer- Schalldämpfer und Zündzeitpunkt bei 30° vor dem oberen Totpunkt gemessen über der Drehzahl
A' T_{zyl} bei Betrieb des Zweitaktmotors mit Einkammer- Schalldämpfer und Zündzeitpunkt bei 24° vor dem oberen Totpunkt gemessen über der Drehzahl
B' T_{zyl} bei Betrieb des Zweitaktmotors mit Zweikammer- Schalldämpfer und Zündzeitpunkt bei 24° vor dem oberen Totpunkt gemessen über der Drehzahl
C' T_{zyl} bei Betrieb des Zweitaktmotors mit Zweikammer- Schalldämpfer und Zündzeitpunkt bei 30° vor dem oberen Totpunkt gemessen über der Drehzahl

## Patentansprüche

1. Zweitaktmotor (100), insbesondere für ein handbetriebenes Motorarbeitsgerät wie ein Garten- und Grünanlagenpflegegerät oder für ein Kleinkraftrad, einen Bootsmotor und dergleichen, mit einem Schalldämpfer (10), wobei
- der Schalldämpfer (10) einen Schalldämpfereinlass (11) aufweist, an den sich ein Strömungskanal (12) anschließt, sodass
- der Strömungskanal (12) mittels des Schalldämpfereinlasses (11) an einem Auslass eines Brennraumes (13) des Zweitaktmotors anbringbar ist,
- wobei der Strömungskanal (12) am dem Schalldämpfereinlass (11) gegenüberliegenden Kanalende (14) in eine erste Kammer (15) mündet,
- wobei ferner eine zweite Kammer (16) vorgesehen ist,
- in die Abgas durch einen vom Strömungskanal (12) abgezweigten Hauptauslass (17) einströmt,
- wobei die erste Kammer (15) durch die zweite Kammer (16) vorzugsweise umschlossen ist, und wobei
- der Strömungskanal (12) zwischen dem Schalldämpfereinlass (11) und der ersten Kammer (15) derart strömungsgünstig ausgeformt ist, dass das in den Schalldämpfereinlass (11) einströmende Abgas aufgrund seiner Massenträgheit überwiegend in die erste Kammer (15) einströmt und nach einer Befüllung der ersten Kammer (15) wieder zurück strömt, und sich hierdurch in Richtung zum Brennraum (13) ein Gegendruck bildet,
**dadurch gekennzeichnet, dass** der Zündzeitpunkt zur Zündung eines im Brennraum (13) vorhandenen Kraftstoff -Luftgemisches im Vergleich zum Zündzeitpunkt eines mit einem baulich auf die zweite Kammer (16) beschränkten Schalldämpfer (10) betriebenen Zweitaktmotors auf einen früheren Zeitpunkt vor den oberen Totpunkt eines den Brennraum (13) hubbeweglich begrenzenden Kolbens (21) gelegt ist.

2. Zweitaktmotor nach Anspruch 1, **dadurch gekennzeichnet, dass** der Zündzeitpunkt derart früher vor den oberen Totpunkt gelegt ist, dass sich ein klopffreier Betrieb des Zweitaktmotors einstellt oder dass sich bei Betrieb des Zweitaktmotors ein Klopfniveau einstellt, das dem Klopfniveau bei Betrieb des Zweitaktmotors mit einem baulich auf die zweite Kammer (16) beschränkten Schalldämpfer (10) entspricht.

3. Zweitaktmotor nach Anspruch 1 oder 2, **dadurch gekennzeichnet, dass** der Zündzeitpunkt derart früher vor den oberen Totpunkt gelegt ist, dass sich bei Betrieb des Zweitaktmotors ein Temperaturniveau im Zylinder (18) des Zweitaktmotors einstellt, das dem Temperaturniveau bei Betrieb des Zweitaktmotors mit einem auf die zweite Kammer (16) beschränkten Schalldämpfer (10) entspricht.

4. Zweitaktmotor nach einem der vorgenannten Ansprüche, **dadurch gekennzeichnet, dass** der Zündzeitpunkt derart früher vor den oberen Totpunkt gelegt ist, dass sich bei Betrieb des Zweitaktmotors ein Druckanstieg / Kurbelwinkel im Brennraum (13) des Zylinders (18) des Zweitaktmotors einstellt, das dem Druckanstieg / Kurbelwinkel bei Betrieb des Zweitaktmotors mit einem auf die zweite Kammer (16) beschränkten Schalldämpfer (10) entspricht.

5. Zweitaktmotor nach einem der vorgenannten Ansprüche, **dadurch gekennzeichnet, dass** die Vorverlegung des Zündzeitpunktes einem Kurbelwinkel von wenigstens 2°, vorzugsweise von wenigstens 4° und besonders bevorzugt von wenigstens 6° entspricht.

6. Zweitaktmotor nach einem der vorgenannten Ansprüche, **dadurch gekennzeichnet, dass** der Zündzeitpunkt auf einen Kurbelwinkel von wenigstens 26°, vorzugsweise von wenigstens 28° und besonders bevorzugt von wenigstens 30° vor den oberen Totpunkt des Kolbens (21) vorverlegt ist.

7. Zweitaktmotor nach einem der vorgenannten Ansprüche, **dadurch gekennzeichnet, dass** eine Zündkerze (25) zum Zünden des Kraftstoff -Luftgemisches vorgesehen ist und von einer Zündeinrichtung (26) betreibbar ist, wobei die Zündeinrichtung (26) Mittel aufweist, durch die der Zündzeitpunkt vorverlegbar ist.

8. Zweitaktmotor nach Anspruch 7, **dadurch gekennzeichnet, dass** ein Drehwinkelsensor (27) vorgesehen ist, der zur Bestimmung des Drehwinkels und/oder der Drehzahl der Kurbelwelle (22) ausgebildet ist, wobei der Drehwinkelsensor (27) mit der Zündeinrichtung (26) verbunden ist und zur Übermittlung einer Drehwinkel- und/oder Drehzahlinformation an die Zündeinrichtung (26) ausgebildet ist.

9. Zweitaktmotor nach Anspruch 8, **dadurch gekennzeichnet, dass** der Drehwinkelsensor in der Zündeinrichtung (26) integriert ist, sodass aus der je Umdrehung benötigten Zeit und der nach Passieren einer Triggerschwelle vergangenen Zeit ein Kurbelwinkel bestimmbar ist.

10. Zweitaktmotor nach Anspruch 7 bis 9, **dadurch gekennzeichnet, dass** ein Klopfsensor (28) vorgesehen und mit der Zündeinrichtung (26) verbunden ist, wobei der Klopfsensor (28) zur Bestimmung des Klopfniveaus ausgebildet und vorzugsweise am Zylinder (18) angeordnet ist.

11. Zweitaktmotor nach einem der Ansprüche 7 bis 10, **dadurch gekennzeichnet, dass** ein Temperatursensor (29) vorgesehen und mit der Zündeinrichtung (26) verbunden ist, wobei der Temperatursensor (29) zur Bestimmung der Temperatur des Zylinders (18) ausgebildet und vorzugsweise am Zylinder (18) angeordnet ist.

12. Motorarbeitsgerät mit einem Zweitaktmotor (100) gemäß einem der Ansprüche 1 bis 11.

13. Verfahren zum Betrieb eines Zweitaktmotors (100), insbesondere für ein handbetriebenes Motorarbeitsgerät wie ein Garten- und Grünanlagenpflegegerät oder für ein Kleinkraftrad, einen Bootsmotor und dergleichen, wobei der Zweitaktmotor (100) mit einem Schalldämpfer (10) ausgeführt ist, und wobei
- der Schalldämpfer (10) einen Schalldämpfereinlass (11) aufweist, an den sich ein Strömungskanal (12) anschließt, sodass
- der Strömungskanal (12) mittels des Schalldämpfereinlasses (11) an einem Auslass eines Brennraumes (13) des Zweitaktmotors angebracht ist,
- wobei der Strömungskanal (12) am dem Schalldämpfereinlass (11) gegenüberliegenden Kanalende (14) in eine erste Kammer (15) mündet,
- wobei ferner eine zweite Kammer (16) vorgesehen ist,
- in die Abgas durch einen vom Strömungskanal (12) abgezweigten Hauptauslass (17) einströmt,
- wobei die erste Kammer (15) durch die zweite Kammer (16) umschlossen ist, und wobei
- der Strömungskanal (12) zwischen dem Schalldämpfereinlass (11) und der ersten Kammer (15) derart strömungsgünstig ausgeformt ist, dass das in den Schalldämpfereinlass (11) einströmende Abgas aufgrund seiner Massenträgheit überwiegend in die erste Kammer (15) einströmt und nach einer Befüllung der ersten Kammer (15) wieder zurück strömt, sodass hierdurch in Richtung zum Brennraum (13) ein Gegendruck gebildet wird,
**dadurch gekennzeichnet, dass** der Zündzeitpunkt zur Zündung eines im Brennraum (13) vorhandenen Kraftstoff -Luftgemisches so vorverlegt wird, dass der Zündzeitpunkt im Vergleich zum Zündzeitpunkt eines mit einem baulich auf die zweite Kammer (16) beschränkten Schalldämpfer (10) betriebenen Zweitaktmotors auf einen früheren Zeitpunkt vor den oberen Totpunkt eines den Brennraum (13) hubbeweglich begrenzenden Kolbens (21) gelegt wird.

## Claims

1. Two-stroke motor (100), in particular for a hand-held power tool such as a garden and park care device or for a moped, a boat motor and the like, with a silencer (10), wherein
- the silencer (10) has a silencer inlet (11) to which a flow channel (12) is connected, so that
- the flow channel (12) by means of the silencer inlet (11) can be attached to an outlet of a combustion chamber (13) of the two-stroke motor,
- wherein the flow channel (12), at the channel end (14) opposite the silencer inlet (11), opens out into a first chamber (15),
- wherein further a second chamber (16) is provided,
- into which exhaust gas flows through a main outlet (17) branching off from the flow channel (12),
- wherein the first chamber (15) is preferably surrounded by the second chamber (16), and wherein
- the flow channel (12) is designed in such a flow-beneficial manner between the silencer inlet (11) and the first chamber (15) that, due to its mass inertia, the exhaust gas flowing into the silencer inlet (11) predominantly flows into the first chamber (15) and after filling the first chamber (15) flows back again, and by this a counter-pressure is formed in the direction of the combustion chamber (13),
**characterized in that** the ignition time for igniting a fuel air mixture present in the combustion chamber (13) is set at an earlier time before the top dead center of a piston (21) defining the combustion chamber (13) in terms of stroke movement, compared with the ignition time of a two-stroke motor operated with a silencer (10) structurally limited to the second chamber (16).

2. Two-stroke motor according to claim 1, **characterized in that** the ignition time is set earlier before the top dead center in such a way that a knock-free operation of the two-stroke motor is reached or that, during operation of the two-stroke motor, a knocking level is reached which corresponds to the knocking level during operation of the two-stroke motor with a silencer (10) limited to the second chamber (16).

3. Two-stroke motor according to claim 1 or 2, **characterized in that** the ignition time is set earlier before the top dead center in such a way that, during operation of the two-stroke motor, in the cylinder (18) of the two-stroke motor a temperature level is reached which corresponds to the temperature level during operation of the two-stroke motor with a silencer (10) limited to the second chamber (16).

4. Two-stroke motor according to any one of the preceding claims, **characterized in that** the ignition time is set earlier before the top dead center in such a way that, during operation of the two-stroke motor, a pressure increase / °crank angle in the combustion chamber (13) of the cylinder (18) of the two-stroke engine is reached which corresponds to the pressure increase / °crank angle during operation of the two-stroke motor with a silencer (10) limited to the second chamber (16).

5. Two-stroke motor according to any one of the preceding claims, **characterized in that** the advancement of the ignition time corresponds to a crank angle of at least 2°, preferably at least 4° and particularly preferably of at least 6°.

6. Two-stroke motor according to any one of the preceding claims, **characterized in that** the ignition time is advanced to a crank angle of at least 26°, preferably of at least 28° and particularly preferably of at least 30° before top dead center of the piston (21).

7. Two-stroke motor according to any one of the preceding claims, **characterized in that** a spark plug (25) for igniting the fuel-air mixture is provided and can be operated by an ignition device (26), wherein the ignition device (26) has means through which the ignition time can be advanced.

8. Two-stroke motor according to claim 7, **characterized in that** a rotation angle sensor (27) is provided, which is designed for determining the rotation angle and / or the rotational speed of the crankshaft (22), wherein the rotation angle sensor (27) is connected to the ignition device (26) and is designed for transmitting rotation angle and / or speed information to the ignition device (26).

9. Two-stroke motor according to claim 8, **characterized in that** the rotation angle sensor is integrated into the ignition device (26), so that a crank angle can be determined from the time required per revolution and the time elapsing after passing a threshold trigger.

10. Two-stroke motor according to claims 7 to 9, **characterized in that** a knocking sensor (28) is provided and is connected to the ignition device (26), wherein the knocking sensor (28) is designed for determining the knocking level and is preferably arranged at the cylinder (18).

11. Two-stroke motor according to one of claims 7 to 10, **characterized in that** a temperature sensor (29) is provided and is connected to the ignition device (26), wherein the temperature sensor (29) is designed for determining the temperature of the cylinder (18) and is preferably arranged at the cylinder (18).

12. Power tool with a two-stroke motor (100) according to any one of claims 1 to 11.

13. Method of operating a two-stroke motor (100), in particular for a hand-held power tool such as a garden and park care device or for a moped, a boat motor and the like, wherein the two-stroke motor (100) is designed with a silencer (10), and wherein
- the silencer (10) has a silencer inlet (11) to which a flow channel (12) is connected, so that
- the flow channel (12) by means of the silencer inlet (11) can be attached to an outlet of a combustion chamber (13) of the two-stroke motor,
- wherein the flow channel (12), at the channel end (14) opposite the silencer inlet (11), opens out into a first chamber (15),
- wherein further a second chamber (16) is provided,
- into which exhaust gas flows through a main outlet (17) branching off from the flow channel (12),
- wherein the first chamber (15) is surrounded by the second chamber (16), and wherein
- the flow channel (12) is designed in such a flow-beneficial manner between the silencer inlet (11) and the first chamber (15) that, due to its mass inertia, the exhaust gas flowing into the silencer inlet (11) predominantly flows into the first chamber (15) and after filling the first chamber (15) flows back again, and by this a counter-pressure is formed in the direction of the combustion chamber (13),
**characterized in that** the ignition time for igniting a fuel air mixture present in the combustion chamber (13) is advanced in such a way that the ignition time is set at an earlier time before the top dead center of a piston (21) defining the combustion chamber (13) in terms of stroke movement, compared with the ignition time of a two-stroke motor operated with a silencer (10) structurally limited to the second chamber (16).

## Revendications

1. Moteur à deux temps (100), en particulier pour outil de travail motorisé à actionnement manuel tel qu'un outil d'entretien de jardins et d'espaces verts ou pour vélomoteur, moteur de bateau ou similaire, comportant un insonorisateur (10), dans lequel
- l'insonorisateur (10) présente une entrée d'insonorisateur (11) à laquelle se raccorde un canal d'écoulement (12), de sorte que
- le canal d'écoulement (12) peut être posé au moyen de l'entrée d'insonorisateur (11) à une sortie d'une chambre de combustion (13) du moteur à deux temps,
- le canal d'écoulement (12) débouche à l'extrémité du canal (14) opposée à l'entrée d'insonorisateur (11) dans une première chambre (15),
- il est prévu en outre une seconde chambre (16)
- dans laquelle du gaz d'échappement afflue par une sortie principale (17) bifurquant du canal d'écoulement (12),
- la première chambre (15) est de préférence entourée par la seconde chambre (16), et
- le canal d'écoulement (12) est conformé pour favoriser l'écoulement entre l'entrée d'insonorisateur (11) et la première chambre (15) de manière à ce que le gaz d'échappement affluant dans l'entrée d'insonorisateur (11), en raison de son inertie massique, afflue majoritairement dans la première chambre (15) et reflue après un remplissage de la première chambre (15) et à ce qu'il se forme ainsi une contre-pression en direction de la chambre de combustion (13),
**caractérisé en ce que** le moment d'allumage pour allumer un mélange de carburant et d'air présent dans la chambre de combustion (13), comparativement au moment d'allumage d'un moteur à deux temps fonctionnant avec un insonorisateur (10) limité structurellement à la seconde chambre (16), est avancé à un moment antérieur avant le point mort supérieur d'un piston (21) mobile en élévation limitant la chambre de combustion (13).

2. Moteur à deux temps selon la revendication 1, **caractérisé en ce que** le moment d'allumage est fixé plus tôt avant le point mort principal de manière à ce qu'un fonctionnement sans cliquetis du moteur à deux temps s'installe et que, lors du fonctionnement du moteur à deux temps, il s'installe un niveau de cliquetis qui correspond au niveau de cliquetis en cas de fonctionnement du moteur à deux temps avec un insonorisateur (10) limité structurellement à la seconde chambre (16).

3. Moteur à deux temps selon la revendication 1 ou 2, **caractérisé en ce que** le moment d'allumage est fixé antérieurement avant le point mort principal de manière à ce que, lors du fonctionnement du moteur à deux temps, il s'installe dans le cylindre (18) du moteur à deux temps un niveau de température qui correspond au niveau de température en cas de fonctionnement du moteur à deux temps avec un insonorisateur (10) limité structurellement à la seconde chambre (16).

4. Moteur à deux temps selon une des revendications précédentes, **caractérisé en ce que** le moment d'allumage est fixé plus tôt avant le point mort principal de manière à ce que, lors du fonctionnement du moteur à deux temps, il s'installe dans la chambre de combustion (13) du cylindre (18) du moteur à deux temps une augmentation de pression/un degré d'angle de vilebrequin qui correspond à l'augmentation de pression/au degré d'angle de vilebrequin en cas de fonctionnement du moteur à deux temps avec un insonorisateur (10) limité structurellement à la seconde chambre (16).

5. Moteur à deux temps selon une des revendications précédentes,
**caractérisé en ce que** l'avancement du moment d'allumage correspond à un angle de vilebrequin d'au moins 2°, de préférence d'au moins 4° et très préférentiellement d'au moins 6°.

6. Moteur à deux temps selon une des revendications précédentes,
**caractérisé en ce que** le moment d'allumage est avancé à un angle de vilebrequin d'au moins 26°, de préférence d'au moins 28° et très préférentiellement d'au moins 30° avant le point mort supérieur du piston (21).

7. Moteur à deux temps selon une des revendications précédentes,
**caractérisé en ce qu'**une bougie d'allumage (25) est prévue pour allumer le mélange de carburant et d'air et peut être actionnée par un dispositif d'allumage (26), le dispositif d'allumage (26) présentant des moyens qui permettent d'avancer le moment d'allumage.

8. Moteur à deux temps selon la revendication 7, **caractérisé en ce qu'**il est prévu un capteur d'angle de rotation (27) qui est conçu pour déterminer l'angle de rotation et / ou la vitesse de rotation du vilebrequin (22), le capteur d'angle de rotation (27) étant connecté au dispositif d'allumage (26) et conçu pour transmettre une information d'angle de rotation et/ou de vitesse de rotation au dispositif d'allumage (26).

9. Moteur à deux temps selon la revendication 8, **caractérisé en ce que** le capteur d'angle de rotation est intégré dans le dispositif d'allumage (26), de sorte que, à partir du temps nécessaire par rotation et du temps passé après avoir passé un seuil de déclenchement, un angle de vilebrequin peut être défini.

10. Moteur à deux temps selon la revendication 7 à 9, **caractérisé en ce qu'**un capteur de cliquetis (28) est prévu et connecté au dispositif d'allumage (26), le capteur de cliquetis (28) étant conçu pour déterminer le niveau de cliquetis et disposé de préférence au niveau du cylindre (18).

11. Moteur à deux temps selon une des revendications 7 à 10, **caractérisé en ce qu'**un capteur de température (29) est prévu et connecté au dispositif d'allumage (26), le capteur de température (29) étant conçu pour déterminer la température du cylindre (18) et disposé de préférence au niveau du cylindre (18).

12. Outil de travail motorisé comportant un moteur à deux temps (100) selon une des revendications 1 à 11.

13. Procédé d'utilisation d'un moteur à deux temps (100), en particulier pour outil de travail motorisé à actionnement manuel tel qu'un outil d'entretien de jardins et d'espaces verts ou pour vélomoteur, moteur de bateau ou similaire, dans lequel le moteur à deux temps (100) est réalisé avec un insonorisateur (10) et dans lequel
- l'insonorisateur (10) présente une entrée d'insonorisateur (11) à laquelle se raccorde un canal d'écoulement (12), de sorte que
- le canal d'écoulement (12) est posé au moyen de l'entrée d'insonorisateur (11) à une sortie d'une chambre de combustion (13) du moteur à deux temps,
- le canal d'écoulement (12) débouche à l'extrémité du canal (14) opposée à l'entrée d'insonorisateur (11) dans une première chambre (15),
- il est prévu en outre une seconde chambre (16)
- dans laquelle du gaz d'échappement afflue par une sortie principale (17) bifurquant du canal d'écoulement (12),
- la première chambre (15) est entourée par la seconde chambre (16), et
- le canal d'écoulement (12) est conformé pour favoriser l'écoulement entre l'entrée d'insonorisateur (11) et la première chambre (15) de manière à ce que le gaz d'échappement affluant dans l'entrée d'insonorisateur (11), en raison de son inertie massique, afflue majoritairement dans la première chambre (15) et reflue après un remplissage de la première chambre (15), de sorte qu'il se forme ainsi une contre-pression en direction de la chambre de combustion (13),
**caractérisé en ce que** le moment d'allumage pour allumer un mélange de carburant et d'air présent dans la chambre de combustion (13), comparativement au moment d'allumage d'un moteur à deux temps fonctionnant avec un insonorisateur (10) limité structurellement à la seconde chambre (16), est avancé à un moment antérieur avant le point mort supérieur d'un piston (21) mobile en élévation limitant la chambre de combustion (13).
